Europäisches Patentamt

European Patent Office

Office européen des brevets

(11) Numéro de publication: **0 323 804**
**A2**

## (12) DEMANDE DE BREVET EUROPEEN

(21) Numéro de dépôt: 88810896.6

(22) Date de dépôt: 23.12.88

(51) Int. Cl.⁴: **F16K 15/04 , F16K 25/00**

(30) Priorité: 07.01.88 CH 41/88

(43) Date de publication de la demande:
12.07.89 Bulletin 89/28

(84) Etats contractants désignés:
BE DE ES FR GB IT NL SE

(71) Demandeur: **MARET S.A.**
**43 Rue des Croix**
**CH-2014 Bôle(CH)**

(72) Inventeur: **Dubach, Roland**
**18b Chemin des Polonais**
**CH-2016 Cortaillod(CH)**

(74) Mandataire: **Vuille, Roman et al**
**c/o KIRKER & Cie S.A. 14, rue du Mont-Blanc**
**Case Postale 872**
**CH-1211 Genève 1(CH)**

(54) **Obturateur unidirectionnel pour fluide sous pression.**

(57) On décrit un obturateur unidirectionnel pour fluide sous pression comprenant les éléments suivants :
une enveloppe cylindrique (1) pourvue d'une chambre (2) présentant à sa base un passage d'entrée de fluide (3) et à son extrémité supérieure un passage de sortie de fluide (4),
une sphère mobile (5) se déplaçant à l'intérieur de la chambre (2) sous l'effet de la pression exercée par le fluide, d'une position d'obturation à une position d'ouverture ou vice-versa,
un anneau (6) solidaire de la base de l'enveloppe (1) servant de siège de la sphère mobile (5) en position d'obturation, la partie supérieure (7) de l'anneau (6) étant conformée de façon à présenter une surface de contact (8) sphérique ou conique ,
la partie supérieure de la chambre (2) présentant des arrêts (9) espacés par des passages (10) débouchant dans le passage de sortie de fluide (4), la partie inférieure de chacun des arrêts (9) étant conformée de façon à présenter une surface de contact (11) sphérique ou conique, la sphère mobile (5) étant retenue par lesdits arrêts (9) en position d'ouverture,
l'enveloppe (1), la sphère mobile (5) et l'anneau (6) étant tous trois composés d'une matière minérale polycristalline; ou essentiellement polycristalline, dense.

**FIG.1**

## Obturateur unidirectionnel pour fluide sous pression

L'invention se rapporte à un dispositif d'obturation pour fluide sous pression, notamment utilisé dans les appareils de chromatographie liquide sous haute pression.

Les appareils de chromatographie liquide sous haute pression nécessitent l'emploi de dispositifs variés, devant résister à de nombreuses contraintes telles que pression élevée (400 à 500 bars, voire 800 bars ou plus), corrosion sous l'action des agents chimiques utilisés (éluants acides ou basiques par exemple), étanchéité parfaite aux différents joints par exemple. Les techniques HPLC (High Pressure Liquid Chromatography) sont à ce jour abondamment appliquées dans l'analyse biologique ou chimique, l'analyse des acides aminés par exemple. Dans de tels cas, une contrainte supplémentaire s'ajoute à celle figurant ci-dessus, la biocompatibilité des divers éléments en contact avec des substances aussi sensibles que les acides aminés : pistons, soupapes, membranes, etc..

Parmi les éléments constitutifs des appareils HPLC devant remplir de telles conditions, figurent les dispositifs d'obturation unidirectionnelle (ou soupapes) placés en aval et en amont de la pompe alimentant l'appareil en liquide sous haute pression. Les dispositifs actuellement connus sont pour l'essentiel constitués d'un manchon en acier inoxydable dans lequel sont insérés, voire sertis des éléments tubulaires en matériau organique polymérisé, placés bout à bout dans le manchon. Ces éléments ménagent une chambre creuse dans laquelle se déplace une bille calibrée de manière adéquate, faite de rubis le plus généralement. Le siège de la bille est constitué d'un anneau en saphir, anneau sur lequel la bille prend appui lorsque le dispositif est en position de fermeture. A l'extrémité opposée de la chambre, se présente un orifice de diamètre moyen sensiblement réduit, comparé à celui de la chambre, agencé de façon qu'un certain passage du fluide soit encore possible, lorsque la bille vient buter contre cet orifice (dispositif en position d'ouverture).

Soumis aux contraintes diverses exposées ci-dessus, les éléments du dispositif en contact avec le fluide subissent une dégradation relativement rapide, augmentée encore par la nature corrosive de certains réactifs utilisés. Indépendamment des précautions prises en outre, l'expérience montre qu'on ne peut totalement éviter le contact de liquides réactifs avec la face interne du manchon en acier, en particulier à l'interface des éléments tubulaires mis bout à bout. Pour des analyses biochimiques, des traces de métaux suffisent alors à perturber le résultat de manière sensible. Dans les dispositifs actuellement construits, l'emploi de matériau organique polymère ne permet pas, en outre, d'obtenir une géométrie favorable quant à l'écoulement du fluide et l'on n'évite pas, de ce fait, des à-coups et des turbulences qui viennent compromettre la fiabilité de l'ensemble, en particulier lorsque les techniques HPLC sont utilisées à des fins d'analyse.

L'objet de la présente invention permet de surmonter efficacement les difficultés inhérentes aux dispositifs connus à ce jour. L'invention consiste en un obturateur unidirectionnel pour fluide sous pression tel que défini à la revendication 1, qui possède encore d'autres avantages, mis en évidence au fur et à mesure de sa description. D'autres objets de l'invention apparaîtront à la lecture du texte ci-après.

La figure 1 illustre, vu en coupe axiale, un obturateur conforme à l'une des mises en oeuvre de l'invention.

La figure 2 est une coupe transversale selon II-II de l'obturateur représenté en figure 1.

La figure 3 illustre, vue en coupe axiale, une autre mise en oeuvre de l'invention.

Conformément à l'invention, l'obturateur comprend une enveloppe cylindrique 1 pourvue d'une chambre présentant à sa base un passage d'entrée de fluide 3 et à son extrémité supérieure un passage de sortie de fluide 4. Les termes "base" et "extrémité supérieure" utilisés tout au long de la description peuvent être indifféremment remplacés par les termes "partie antérieure" et "partie postérieure" dès lors que le fonctionnement de l'obturateur n'est pas lié à sa position dans l'espace. Les termes ci-dessus permettent simplement de se référer plus aisément au dessin annexé.

Au sein de ladite enveloppe est aménagée une chambre 2 de forme générale cylindrique dont l'axe coïncide avec celui de l'enveloppe 1. Une sphère mobile 5 se déplace à l'intérieur de la chambre 2, sous l'effet de la pression exercée par le fluide, d'une position d'obturation à une position d'ouverture ou vice-versa, selon l'axe de la chambre.

L'obturateur comprend en outre un anneau 6, solidaire de la base de l'enveloppe 1, servant de siège à la sphère mobile 5 lorsque celle-ci se trouve placée en position d'obturation, la partie supérieure 7 de l'anneau 6 étant conformée de façon à prsenter une surface de contact 8 sphérique ou conique : elle sera de préférence sphérique. Grâce à cette conformation particulière, on assure une obturation totale, quelle que soit la pression existant au sein de la chambre 2. On évite en outre une usure prématurée de la sphère mobile 5 ou de son siège 6 du moment qu'il n'y a aucun contact au niveau des arêtes.

Selon l'invention, l'anneau 6 est solidaire du corps de l'enveloppe 1 et constitue avec cette dernière, après montage, une pièce unique enfermant la sphère mobile 5. Les techniques de solidarisation de l'anneau 6 à la base de l'enveloppe 1 seront décrites plus loin.

L'une des caractéristiques essentielles de l'invention consiste en l'agencement particulier de la partie supérieure de la chambre 2 de l'obturateur. Celle-ci présente des arrêts 9, espacés par des passages 10 débouchant dans le passage de sortie du fluide 4, la partie inférieure de chacun des arrêts 9 étant conformée de façon à présenter une surface de contact 11 sphérique ou conique, de préférence sphérique : la sphère mobile 5 est retenue par lesdits arrêts 9 lorsqu'elle se trouve en position d'ouverture. Tout comme dans le cas du siège de la sphère mobile, cette conformation particulière présente l'avantage d'éviter tout contact de la sphère mobile 5 avec des arêtes : on assure ainsi un positionnement exact de ladite sphère, quasi immuable dans le temps, ce qui garantit un écoulement régulier du fluide sortant.

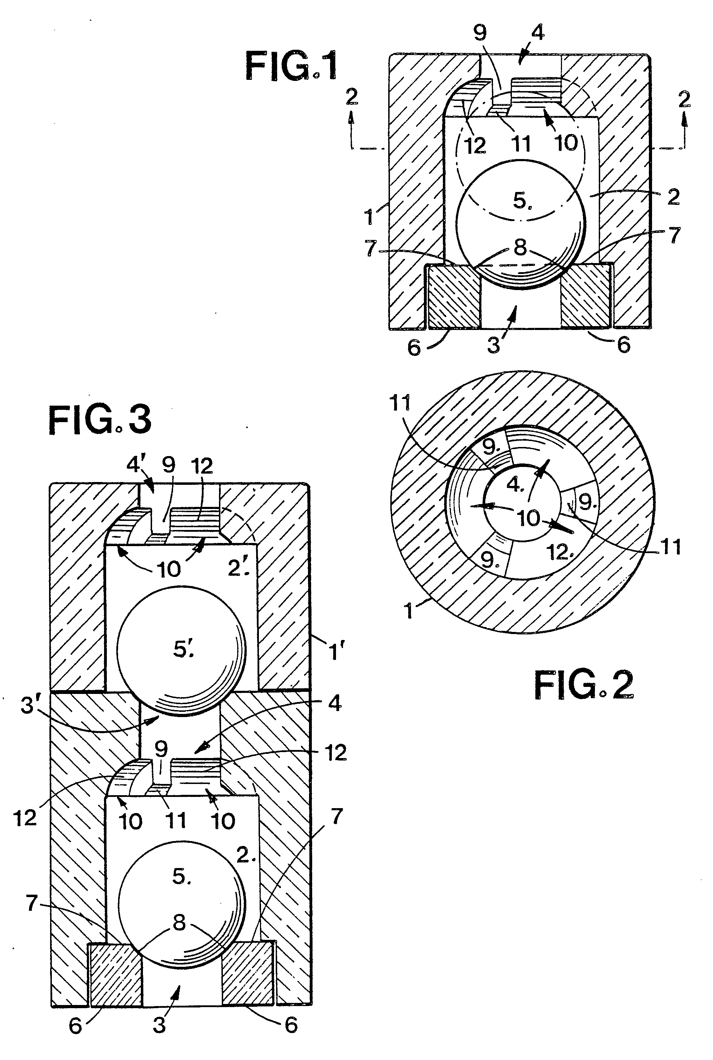

Pour assurer la régularité de cet écoulement, on disposera les arrêts 9 et les passages intercalaires 10 dans un ordre de symétrie circulaire. Dans l'exécution illustrée par la figure 2, ces éléments sont au nombre de trois, espacés chacun d'un angle de 120°. D'autres dispositions peuvent être bien entendu envisagées.

Selon l'invention, les passages 10 sont conformés de façon telle qu'ils présentent une surface d'écoulement de fluide 12 permettant de réduire au minimum la perte de pression de fluide au passage de sortie : la mécanique des fluides permet, notamment par le calcul, de déterminer la conformation optimale de la surface 12. Dans l'exécution préférentielle illustrée par Fig. 1, lorsque la sphère mobile 5 bute contre les arrêts 9 (position d'ouverture), l'espace ainsi ménagé pour l'écoulement du fluide est des plus réguliers, du moment que le rayon de courbure de la surface d'écoulement 12 est calculé de sorte qu'il parte du centre de la sphère 5 (position en pointillé sur la figure 1). Une telle conformation peut être déterminée sans autre par le calcul. Dans une telle exécution préférentielle, on peut ainsi se rapprocher d'un écoulement laminaire, réduisant de façon très sensible la turbulence et, par voie de conséquence, les pertes de pression de fluide que cela entraîne. Cette conformation particulière permet également de diminuer au maximum le volume mort de la chambre 2.

Une autre caractéristique essentielle de l'invention réside dans le fait que tous les éléments constitutifs de l'obturateur, l'enveloppe 1, la sphère mobile 5 et l'anneau 6 sont composés d'un matériau minéral polycristallin ou essentiellement polycristallin dense, préférentiellement du même matériau, plus précisément une céramique. Il s'agit dans un tel cas d'une céramique dense, imperméable aux liquides, aux gaz et aux vapeurs, essentiellement à base d'alumine, de zircone, de carbure de silicium, d'oxyde de titane ou d'autres céramiques techniques.

Cette énumération n'est pas exhaustive, cependant; il s'agit de produits accessibles sur le marché, qui peuvent être mis en oeuvre à l'aide des techniques usuelles pour l'homme du métier. Grâce à l'emploi de tels matériaux, on peut aisément reproduire, notamment par moulage ou formage sous pression, les conformations désirées, en particulier celles caractéristiques de la partie supérieure de la chambre 2.

Ce type de matériau minéral conditionne également les techniques de solidarisation de l'anneau 6 à la base de l'enveloppe 1 : cimentage à l'aide de ciment céramique ou de verre-ciment, soudage par diffusion ou toute autre méthode appropriée. Une fois soudé ou cimenté, l'anneau 6 fait corps avec l'enveloppe 1, de façon irréversible. Si désiré, diverses techniques permettent de rendre mono cristalline la couche externe de la sphère 5 ou celle de l'anneau 6, ce qui contribue encore à augmenter la longévité de l'ensemble.

L'obturateur unidirectionnel ainsi constitué se présente alors sous forme de module que l'on peut facilement insérer dans une pièce appropriée. Son changement, suite à usure ou encrassage, ne nécessite alors plus aucune opération de démontage telles celles que l'on est contraint de pratiquer avec les dispositifs actuels. De par sa nature minérale (céramique), l'obturateur est en outre parfaitement biocompatible. En outre, l'enveloppe 1 étant faite d'une pièce unique, il ne se pose aucun problème d'étanchéité à ce niveau, contrairement à la situation rencontrée actuellement. Lors des opérations de mise en place du module (obturateur), on évite tout risque de contamination par des poussières extérieures, notamment pour ce qui est de la sphère 5 et de l'anneau 6. La fiabilité d'un appareil HPLC, par exemple, s'en trouve nettement améliorée.

Un autre objet de la présente invention consiste en un ensemble d'au moins deux obturateurs tels que définis ci-dessus placés bout à bout, le passage de sortie de fluide 4 du premier obturateur débouchant dans le passage d'entrée de fluide 3′ de la chambre 2′ du second obturateur.

Dans une exécution particulière d'un tel ensemble, la partie supérieure 3 du premier obturateur est conformée de façon à servir de siège de la sphère mobile 5′ du second obturateur. Une telle conformation a l'avantage de réduire de façon sensible le volume mort existant dans l'ensemble formé des deux modules ainsi superposés. Les techniques de solidarisation que l'on peut mettre en oeuvre à ce propos ont été décrites plus haut.

Il va de soi que l'obturateur unidirectionnel s'adapte à bon nombre d'emplois, la technique HPLC étant particulièrement appropriée. Il peut être en outre adapté au transport de fluides fort divers, gaz ou liquides.

**Revendications**

1. Obturateur unidirectionnel pour fluide sous pression comprenant
une enveloppe cylindrique (1) pourvue d'une chambre (2) présentant à sa base un passage d'entrée de fluide (3) et à son extrémité supérieure un passage de sortie de fluide (4),
une sphère mobile (5) se déplaçant à l'intérieur de la chambre (2) sous l'effet de la pression exercée par le fluide, d'une position d'obturation à une position d'ouverture ou vice-versa,
un anneau (6) solidaire de la base de l'enveloppe (1) servant de siège de la sphère mobile (5) en position d'obturation, la partie supérieure (7) de l'anneau (6) étant conformée de façon à présenter une surface de contact (8) sphérique ou conique,
la partie supérieure de la chambre (2) présentant des arrêts (9) espacés par des passages (10) débouchant dans le passage de sortie de fluide (4), la partie inférieure de chacun des arrêts (9) étant conformée de façon à présenter une surface de contact (11) sphérique ou conique, la sphère mobile (5) étant retenue par lesdits arrêts (9) en position d'ouverture,
l'enveloppe (1), la sphère mobile (5) et l'anneau (6) étant tous trois composés d'une matière minérale polycristalline, ou essentiellement polycristalline, dense.

2. Obturateur selon la revendication 1, caractérisé en ce que l'enveloppe (1), la sphère mobile (5) et l'anneau (6) sont en céramique.

3. Obturateur selon la revendication 2, caractérisé en ce que l'enveloppe (1), la sphère mobile (5) et l'anneau (6) sont à base d'alumine, de zircone, de carbure de silicium ou d'oxyde de titane.

4. Obturateur selon l'une des revendications 1 à 3, caractérisé en ce que l'anneau (6) est soudé ou cimenté à la base de la chambre (2).

5. Obturateur selon l'une des revendications 1 à 4, caractérisé en ce que les passages (10) présentent une surface d'écoulement de fluide (12) permettant de réduire au minimum la perte de pression auxdits passages.

6. Ensemble formé de deux obturateurs selon la revendication 1 placés bout à bout, le passage de sortie de fluide (4) du premier obturateur débouchant dans le passage d'entrée de fluide (3') de la chambre (2') du second obturateur.

7. Ensemble selon la revendication 6, caractérisé en ce que la partie supérieure (12) du premier obturateur est conformée de façon à servir de siège de la sphère mobile (5') du second obturateur.

FIG.1

FIG.3

FIG.2